# EUROPÄISCHE PATENTSCHRIFT

(11) **EP 2 258 546 B1**
(45) Veröffentlichungstag und Bekanntmachung des Hinweises auf die Patenterteilung: **21.03.2012**
(21) Anmeldenummer: 09160010.6
(22) Anmeldetag: 12.05.2009
(51) Int. Cl.: B32B 17/10, C03C 27/12, C08J 9/10, C08J 9/08

(54) **Verfahren zur Herstellung von laminierten Schichtkörpern mit dekorativen Gaseinschlüssen**
Method for manufacturing laminated bodies with decorative gas inclusions
Procédé de fabrication de corps stratifiés dotés de bulles de gaz décoratives

(43) Veröffentlichungstag der Anmeldung: 08.12.2010
(73) Patentinhaber: Kuraray Europe GmbH, 65926 Frankfurt am Main (DE)
(72) Erfinder: Keller, Uwe, Dr., D-53177, Bonn (DE)
(74) Vertreter: Kisters, Michael Marcus

(56) Entgegenhaltungen:
- EP-A- 0 175 965
- DE-B1- 1 073 164
- JP-A- 11 171 604
- JP-A- 56 054 235
- US-A- 2 532 241
- US-A- 3 160 925
- US-A- 3 471 356

## Beschreibung

### Technisches Gebiet

Die Erfindung betrifft ein Verfahren zur Herstellung von Verbundglaslaminaten bzw. laminierten Schichtkörpern, die dekorative Gaseinschlüsse aufweisen.

### Stand der Technik

Verbundsicherheitsgläser bestehen im Allgemeinen aus zwei Glasscheiben und einer die Glasscheiben verbindenden Zwischenfolie. Als Folienmaterial wird überwiegend weichmacherhaltiger teilacetalisierter Polvinylalkohol (Polyvinylacetal), insbesondere Polyvinylbutyral (PVB) verwendet. Verbundsicherheitsgläser (VSG) werden beispielsweise als Windschutzscheiben oder Seitenverglasungen im Kraftfahrzeugbereich sowie als Sicherheitsverglasung im Baubereich eingesetzt.

Verfahren und Materialien zur Herstellung von Verbundglaslaminaten sind allgemein bekannt, so z.B. aus EP 0877665 B1, EP 185863, EP 118258, WO 02/102591 oder EP 387148. Hier werden polymere Zwischenschichten zum Verkleben flächig ausgedehnter Schichten, wie etwa Glas oder aus flexiblen Materialien, wie etwa Folien, verwendet. Hierbei kommen Verfahren zum Einsatz, bei welchen die polymeren Zwischenschichten als Rollenware oder in Form von Platten zunächst lose zwischen die zu verbindenden Schichten eingelegt und anschließend mit diesen unter Anwendung von Druck und Wärme verklebt werden.

Bei der Herstellung von Verbundglas aus mindestens zwei Glasplatten und einer flexiblen polymeren Zwischenschicht weisen letztere in aller Regel eine leicht strukturierte raue Oberfläche auf, damit zunächst eingefangene Luft durch die damit gegebenen Kanäle entlang der Kontaktfläche wieder ausströmen kann. Hierbei darf auf der Stufe der Vorverbundherstellung zusätzlich zu der bereits in der Zwischenschicht gelösten Luft nur gerade Luft eingeschlossen werden, dass diese auch bei späterem Wiedererwärmen des Verbundes bei Normaldruck nicht ausperlt und zu einer Blasenbildung in der polymeren Zwischenschicht führt.

Um im Verbundglas eingeschlossene Luft zu erkennen, werden bei der Herstellung im Rahmen der Qualitätskontrolle die Verbunde üblicherweise Wärmebelastungstests (Bake-Test) unterzogen. Ist bei diesem Test keine Blasenbildung zu beobachten, kann man davon ausgehen, dass auch später in der Anwendung bei erhöhten Gebrauchstemperaturen keine Blasen in der polymeren Zwischenschicht sichtbar werden.

Gasblasen im Endverbund sind ein Qualitätsmangel und stellen einen Reklamationsgrund dar. Mit den Verfahren des Stands der Technik werden daher Gasblasen im Endverbund vermieden. Andererseits können z.B. sternförmig ausstrahlende Blasenmuster in einem Endverbund eine ästhetische Wirkung haben.

Es ist aus US 3471356 bekannt, Verbundglaslaminate mit geschäumten Polyurethanfolien herzustellen. Diese Laminate sind an keiner Stelle transparent und der Schäumvorgang wird nicht während des Laminierprozessen durchgeführt. Dies bedeutet einen zusätzlichen Arbeitsschritt.

JP 11171604 offenbart die Herstellung von Verbundverglasungen als Isolationsmaterial unter Verwendung von überkritischem CO₂ in einer Zwischenschichtfolie. Hiermit können kleine gezielte Blasenmuster hergestellt werden.

Aus US 2532241 ist bekannt, Polyvinylacetale mit Aziden zur Herstellung von Isolationsmaterial aufzuschäumen. Die Verwendung in Glaslaminaten wird nicht beschrieben.

### Aufgabe

Aufgabe der vorliegenden Erfindung war es daher, gezielt Gaseinschlüsse in einer möglichst dekorativen und ästhetischen Anordnung in einen laminierten Schichtkörper einzubringen.

### Technische Lösung

Es wurde gefunden, dass durch Einbringen kleiner Mengen eines geeigneten Treibmittels auf oder in die Zwischenschichtfolie in einfacher und reproduzierbarer Weise Verbundgläser mit ästhetisch ansprechenden Blasenmustern erhalten werden können.

### Darstellung der Erfindung

Gegenstand der Erfindung ist daher ein Verfahren zur Herstellung von dekorativen Gaseinschlüssen enthaltenden Laminaten durch Erwärmen eines Schichtkörpers aus mindestens zwei transparenten Scheiben und mindestens einer polymeren Zwischenschichtfolie, wobei der Schichtkörper mindestens ein Treibmittel enthält und über die Zerfallstemperatur des Treibmittels erwärmt wird und mindestens ein Treibmittel auf die polymeren Zwischenschichtfolien und/oder mindestens eine transparente Scheibe aufgebracht wird.

Die polymeren Zwischenschichtfolien enthalten mindestens ein Treibmittel. Das Treibmittel wird bei der Herstellung entweder in die Folie eingemischt oder auf die polymeren Zwischenschichtfolien und/oder mindestens eine transparente Scheibe aufgebracht.

Bevorzugt werden die Treibmittel als Feststoff, Dispersion oder Lösung auf eine oder beide Oberflächen des Films und/oder auf die in das Innere des Schichtkörpers gerichteten Oberflächen eines oder beider transparenten Scheiben aufgebracht. Im Schichtkörper liegen die Treibmittel dann in die Zwischenschichtfolie eingearbeitet wie z.B. eingedrückt oder eindiffundiert vor oder liegen in Kontakt mit den Oberflächen der Zwischenschichtfolie vor, was im technischen Rahmen der vorliegenden Erfindung als gleichbedeutend oder gleichwirkend angesehen wird.

Geeignete Lösungs- oder Dispersionsmittel sind in Abhängigkeit von den eingesetzten Treibmitteln und Zwischenschichtfolien einfach zu ermitteln und sollen die Zwischenschichtfolie nicht auflösen oder aufquellen. Bei Verwendung von weichmacherhaltigen Polyvinylacetalfolien bietet sich hierfür der jeweils eingesetzte Weichmacher an. Die Auftragung erfolgt z.B. mit geeigneten Druckern im Ink-Jet-Verfahren oder durch Aufsprühen oder Aufpinseln auf den Film und/oder die transparenten Scheiben.

Die Aufbringung als Feststoff erfolgt zweckmäßigerweise mit einer Dosiereinrichtung z.B. einem Sieb und/oder einer Schablone.

Mit dem erfindungsgemäßen Verfahren können Verbundverglasungen aus zwei oder mehr transparenten Scheiben, die durch die Zwischenschichtfolie miteinander verklebt werden, hergestellt werden. Die transparenten Scheiben können aus Glas oder Polymeren wie z.B. PMMA, Polycarbonat oder PVC bestehen. Es ist auch möglich, Laminate aus einer Glasscheibe und einer Polymerscheibe, z.B. aus PMMA, Polycarbonat oder PVC herzustellen.

Die erfindungsgemäß eingesetzten Treibmittel sind chemische Agenzien, welche unter bestimmten Bedingungen ein oder mehrere Gase freisetzen und werden z.B. in der Kunststoffindustrie zum Aufschäumen von thermoplastischen Materialien verwendet. Typischerweise zerfallen solche Treibmittel aufgrund ihrer chemischen Konstitution spontan oder unterstützt durch einen Katalysator oberhalb einer bestimmten Temperatur und spalten dabei z.B. Stickstoff ab. Klassischer Vertreter dieser Stoffgruppe ist Azodicarbonamid (ADC).

Im Rahmen der Erfindung besonders geeignete Treibmittel setzen oberhalb einer Temperatur, bei welcher der Vorverbund im Rahmen der üblichen Herstellverfahren von Verbundglaslaminaten ohnehin unter Anwendung von Druck gehalten wird, Gase frei. Unter dieser Bedingung kann die einzubringende Treibmittelmenge so gering gehalten werden, dass nach Abkühlen und Entfernen des Druckes zunächst keine Gasschlüsse im Verbund sichtbar sind. Bei dessen Wiedererwärmung unter Normaldruck entstehen je nach Verteilung und Menge des Treibmittels aber ästhetisch reizvolle Blasenmuster.

Bevorzugt werden daher Treibmittel eingesetzt, die in einem Temperaturbereich von 80 bis 180 °C, vorzugsweise 100 bis 140 °C in mindestens ein gasförmiges Produkt zerfallen.

Als Treibmittel im Rahmen der Erfindung werden nicht nur kommerzielle als solche bezeichnete Produkte, sondern grundsätzlich alle in ähnlicher Weise wirkende Substanzen verstanden, welche unter Temperatureinwirkung ein Gas abspalten egal, ob dies durch spontanen thermischen Zerfall oder aber als Folge einer anderen bei erhöhter Temperatur vonstattengehenden Reaktion geschieht. Bevorzugte Treibmittel setzen Stickstoff oder Kohlendioxid frei. Insbesondere Kohlendioxid kann auch aus anorganischen Substanzen durch Säure freigesetzt werden, welche ihrerseits bei der Prozesstemperatur freigesetzt wird. Ein wichtiger Aspekt bei der Auswahl geeigneter Treibmittel ist auch deren Lager- und Handhabungssicherheit.

Eine Aufstellung von prinzipiell geeigneten Treibmitteln kann Kapitel 13 aus "Plastics Additives Handbook"; 5th Edition, 2001; Carl Hanser Verlag; ISBN 3-446-19579-3, entnommen werden. Besonders geeignet sind z.B. Azodicarbonamide, Toluolsulfohydrazide, und/oder Bicarbonate.

Ein besonders geeignetes kommerziell erhältliches Treibmittel ist POROFOR TSH der Firma Lanxess GmbH (ein Toluolsulfohydrazid). Dieses setzt oberhalb von ca. 110 °C neben Wasser Stickstoff frei. Seine besondere Eignung resultiert daraus, dass die Abspalttemperatur genau innerhalb des für die Verbundglasherstellung üblichen Temperaturfensters liegt. Weiterhin ist Natriumbicarbonat wegen seiner leichten Verfügbarkeit und hohen Gasausbeute geeignet.

Günstig für das Verfahren gemäß der Erfindung ist, dass der das Treibmittel enthaltende Verbund bei gleichzeitig anliegenden äußeren Druck (z.B. Autoklavendruck) auf die die Freisetzung des Gases auslösende Temperatur gebracht wird. So kann das erfindungsgemäße Verfahren z.B. durchgeführt werden, indem der Schichtkörper unter Erwärmen über die Zerfallstemperatur des Treibmittels zunächst zu einem weitgehend blasenfreien Laminat verarbeitet wird und sich das dekorative Blasenmuster bei wieder reduziertem Druck z.B. auf Normaldruck, durch nachfolgendes Wiedererwärmen des Schichtkörpers über die Erweichungstemperatur der Zwischenschichtfolie hinaus ausbildet. Das Wiedererwärmen bei wieder reduziertem Druck findet bevorzugt auf Temperaturen von mehr als 50 °C, 70 °C, besser 80 °C und insbesondere mehr als 90 °C statt. Bei üblichen PVB-Folien liegt die Erweichungstemperatur im Bereich von ca. 70 °C - 90 °C.

Bevorzugt wird das erfindungsgemäße Verfahren in gängige Verfahren zur Verbundglasherstellung integriert. So kann der Schichtkörper bei einer Temperatur über der Zerfallstemperatur des Treibmittels unter erhöhtem Druck zu einem Laminat verarbeitet werden, wobei das Treibmittel zerfällt und Gas freisetzt. Unter den Druckbedingungen bleibt das aus dem zerfallenen Treibmittel erhaltene Gas jedoch ganz oder teilweise z.B. in übersättigter Form in der Zwischenschichtfolie gelöst. Erst nach der Reduzierung des erhöhten Drucks z.B. auf Normaldruck (1024 mbar) und Abkühlen des Laminats unter die Zerfallstemperatur des Treibmittels sowie anschließendes Wiedererwärmen des Lamiats über die Erweichungstemperatur der Zwischenschichtfolie (z.B. über 70°C) perlt das aus dem zerfallenen Treibmittel erhaltene Gas aus und bildet die gewünschten Gaseinschlüsse. Alternativ kann das Laminat nach der Reduzierung des erhöhten Drucks z.B. auf Normaldruck (1024 mbar) und Abkühlen unter die Zerfallstemperatur des Treibmittels einem reduziertem Druck (d.h. unterhalb des Normdruck von 1024 mbar) ausgesetzt werden, wobei die Gaseinschlüsse ausperlen. Natürlich kann in dieser Verfahrensvariante die Temperatur des Lamiats ebenfalls über die Erweichungstemperatur der Zwischenschichtfolie (z.B. über 70°C) angehoben werden.

Die Prozessparameter der bei der Verbundglasherstellung gängigen Verfahren sind dem Fachmann bekannt bzw. werden im Folgenden noch näher beschrieben.

Die Größe und Form der erfindungsgemäß erzeugten Gaseinschlüsse bzw. deren geometrischer Anordnung in einem Muster kann durch Variation der Treibmittelmenge, der Konzentration, der Verteilung, der wahlweisen Aufbringung an der Grenzfläche Folie/Glas oder Folie/Folie (bei Verwendung mehrer Folienlagen), durch die Verweilzeit im Autoklav, durch Nutzung von Temperaturgradienten, durch die gewählten Parameter beim Wiederaufheizen (Temperatur, Druck abweichend von Normaldruck) in mannigfaltiger Weise beeinflusst werden. Auch kann das Treibmittel als Feststoff oder alternativ suspendiert in einem Trägermedium wie z.B. den Weichmacher oder gelöst in einem Lösemittel appliziert werden.

Denkbar ist auch ein automatisiertes Bedrucken der Folienoberfläche oder des Glases mit einer Lösung oder Suspension des Treibmittels und anschließende Trocknung. Natürlich können auch Farbfolien oder andere dekorative Techniken in Kombination verwendet werden. Möglich ist auch die Kombination verschiedener Polymerfolien, die eine unterschiedliche Tendenz zur Blasenbildung bzw. unterschiedliche Muster erzeugen. Im einfachsten Fall handelt es sich um zwei PVB-Folien, welche sich in Bezug auf ihr Fließverhalten, z.B. durch einen unterschiedlichen Weichmachergehalt oder durch unterschiedliche Polymereigenschaften voneinander unterscheiden.

Um das Risiko von Rissbildung im Glas während des Ausperlvorganges und danach im fertigen Zustand zu reduzieren, kann Glas ausreichender Dicke oder thermisch vorgespanntes Glas zum Einsatz kommen.

Bevorzugt enthält die polymere Zwischenschichtfolie weichmacherhaltiges Polyvinylacetal, insbesondere weichmacherhaltiges Polyvinylbutyral,

Bevorzugt enthalten die weichmacherhaltigen Polyvinylacetalfolien 60 bis 90 % Polyvinylacetal und 10 bis 40 Gew.% (bezogen auf die Gesamtrezeptur der Folie) mindestens eines Weichmachers.

Bevorzugt weisen die Folien einen Gesamtweichmachergehalt d.h. der Anteil aller Weichmacher in der Folie im Bereich von 10 - 40 Gew.%, 14 - 35 Gew.%, 16 - 32 Gew.%, 18 - 30 Gew.%, insbesondere 22 - 28 Gew.% auf.

Die Folien können Weichmacher oder Weichmachermischungen aus den folgenden, für PVB-Folie bekannten Weichmachern enthalten:
- Ester von mehrwertigen aliphatischen oder aromatischen Säuren, z.B. Dialkyladipate wie Dihexyladipat, Dioctyladipat, Hexylcyclohexyladipat, Mischungen aus Heptyl- und Nonyladipaten, Diisononyladipat, Heptylnonyladipat sowie Ester der Adipinsäure mit cycloaliphatischen oder Etherbindungen enthaltenden Esteralkoholen, Dialkylsebazate wie Dibutylsebazat sowie Ester der Sebazinsäure mit cycloaliphatischen oder Etherbindungen enthaltenden Esteralkoholen, Estern der Phthalsäure wie Butylbenzylphthalat oder Bis-2-butoxyethylphthalat.
- Ester oder Ether von mehrwertigen aliphatischen oder aromatischen Alkoholen oder Oligoetherglykolen mit einem oder mehreren unverzweigten oder verzweigten aliphatischen oder aromatischen Substituenten, wie z.B. Estern von Di-, Tri- oder Tetraglykolen mit linearen oder verzweigten aliphatischen oder cycloaliphatischen Carbonsäuren; Als Beispiele für letztere Gruppe können dienen Diethylenglykol-bis-(2-ethylhexanoat), Triethylenglykol-bis-(2-ethylhexanoat), Triethylenglykol-bis-(2-ethylbutanoat), Tetraethylenglykol-bis-n-heptanoat, Triethylenglykol-bis-n-heptanoat, Triethylenglykol-bis-n-hexanoat, Tetraethylenglykoldimethylether Diisononylcyclohexandicarbonsäureester (DINCH) und/oder Dipropylenglykolbenzoat.
- Di-(2-butoxyethyl)-adipat (DBEA), Di-(2-butoxyethyl)-sebacat (DBES), Di-(2-butoxyethyl)-azelat, Di-(2-butoxyethyl)-glutarat. Di-(2-butoxyethoxyethyl)-adipat (DBEEA), Di-(2-butoxyethoxyethyl)-sebacat (DBEES), Di-(2-butoxyethoxyethyl)-azelat, Di-(2-butoxyethoxyethyl)-glutarat, Di-(2-hexoxyethyl)-adipat, Di-(2-hexoxyethyl)-sebacat, Di-(2-hexoxyethyl)-azelat, Di-(2-hexoxyethyl)-glutarat, Di-(2-hexoxyethoxyethyl)-adipat, Di-(2-hexoxyethoxyethyl)-sebacat, Di-(2-hexoxyethoxyethyl)-azelat, Di-(2-hexoxyethoxyethyl)-glutarat, Di-(2-butoxyethyl)-phthalat und/oder Di-(2-butoxyethoxyethyl)-phthalat.. Ebenso können nichtionische Tenside verwendet werden.

Zusätzlich können erfindungsgemäß verwendete Folien weitere, dem Fachmann bekannte Zusätze enthalten wie Restmengen an Wasser, UV-Absorber, Antioxidantien, Haftungsregulatoren, optische Aufheller, Stabilisatoren, Farbmittel, Verarbeitungshilfs-mittel, organische oder anorganische Nanopartikel, pyrogene Kieselsäure und/oder oberflächenaktive Stoffe.

Bevorzugt wird als Polyvinylacetal ein teilacetalisierter bzw. teilbutyralisierter Polyvinylalkohol (Polyvinylbutyral) mit einem Polyvinylacetalgehalt (Acetalisierungsgrad) von gleich oder mehr als 81 Gew.-%, bevorzugt 82, besonders bevorzugt 83, insbesondere 84 Gew.-% eingesetzt. In besonders bevorzugten Varianten der Erfindung liegt der Acetalisierungsgrad bei ca. 1 Gew.-% Restacetat bei 81 - 87, 82 - 86 und 83 - 85,5 Gew.-%. Bei höheren Restacetatgehalten oberhalb 1 Gew.% reduzieren sich die genannten Zahlenwerte für den Acetalysierungsgrad entsprechend.

Die Summe von Acetalysierungsgrad und Restacetat kann als der zu Hundert fehlende Teil aus dem gemäß ASTM D 1396 bestimmten Polyvinylalkoholgehalt, d.h. den Anteil an freien Hydroxylgruppen des Polyvinylacetals berechnet werden. Der Acetalysierungsgrad kann auch durch hochauflösende NMR-Spektroskopie direkt bestimmt werden.

Zur Herstellung von Polyvinylacetal wird Polyvinylalkohol in Wasser gelöst und mit einem Aldehyd wie Butyraldehyd unter Zusatz eines Säurekatalysators acetalisiert. Das ausgefallene Polyvinylacetals wird abgetrennt, neutral gewaschen, ggf. in einem alkalisch eingestellten wässrigen Medium suspendiert, danach erneut neutral gewaschen und getrocknet.

Der Polyvinylalkoholgehalt des Polyvinylacetals kann durch die Menge des bei der Acetalisierung eingesetzten Aldehyds eingestellt werden. Es ist auch möglich, die Acetalisierung mit anderen oder mehreren Aldehyden mit 2-10 Kohlenstoffatomen (z.B. Valeraldehyd) durchzuführen.

Die auf weichmacherhaltigem Polyvinylacetal basierenden Folien enthalten bevorzugt unvernetztes Polyvinylbutyral (PVB), das durch Acetalisierung von Polyvinylalkohol mit Butyraldehyd gewonnen wird.

Der Einsatz von vernetzten Polyvinylacetalen, insbesondere vernetztem Polyvinylbutyral (PVB) ist ebenso möglich. Geeignete vernetzte Polyvinylacetale sind z.B. in EP 1527107 B1 und WO 2004/063231 A1 (thermische Selbstvernetzung von Carboxylgruppenhaltigen Polyvinylacetalen), EP 1606325 A1 (mit Polyaldehyden vernetzte Polyvinylacetale) und WO 03/020776 A1 (mit Glyoxylsäure vernetzte Polyvinylacetale) beschrieben. Auf die Offenbarung dieser Patentanmeldungen wird vollumfänglich Bezug genommen.

Als Polyvinylalkohol können im Rahmen der vorliegenden Erfindung auch Terpolymere aus hydrolysierten Vinylacetat/Ethylen-Copolymeren eingesetzt werden. Diese Verbindungen sind in der Regel zu mehr als 98 Mol% hydrolysiert und enthalten 1 bis 10 Gew. auf Ethylen basierende Einheiten (z.B. Typ "Exceval" der Kuraray Europe GmbH).

Als Polyvinylalkohol können im Rahmen der vorliegenden Erfindung weiterhin auch hydrolysierte Copolymere aus Vinylacetat und mindestens einem weiteren ethylenisch ungesättigten Monomer eingesetzt werden.

Die Polyvinylalkohole können im Rahmen der vorliegenden Erfindung rein oder als Mischung von Polyvinylalkoholen mit unterschiedlichem Polymerisationsgrad oder Hydrolysegrad eingesetzt werden.

Polyvinylacetale enthalten neben den Acetaleinheiten noch aus Vinylacetat und Vinylalkohol resultierende Einheiten. In der Regel liegt der Polyvinylalkohol-Gehalt der eingesetzten teilacetalisierten Polyvinylalkohole zwischen 12 und 18 %, bevorzugt zwischen 13 und 16 % und am meisten bevorzugt zwischen 14 und 16 %.

Der Restacetatgehalt der erfindungsgemäß verwendeten Polyvinylacetale liegt in der Regel bei weniger als 5 Gew.%, bevorzugt weniger als 3 Gew.-%, besonders bevorzugt bei weniger als 2 Gew.% und insbesondere bei weniger als 1,5 Gew.-% oder 1 Gew.%.

Zur Laminierung des Schichtkörpers können die dem Fachmann geläufigen Verfahren mit und ohne vorhergehende Herstellung eines Vorverbundes eingesetzt werden.

So genannte Autoklavenprozesse werden bei einem erhöhten Druck von ca. 10 bis 15 bar und Temperaturen von 120 bis 145 °C über ca. 2 Stunden durchgeführt. Vakuumsack- oder Vakuumringverfahren z.B. gemäß EP 1 235 683 B1 arbeiten bei ca. 200 mbar und 130 bis 145 °C

Alternativ können Vakuumlaminatoren eingesetzt werden. Diese bestehen aus einer beheizbaren und evakuierbaren Kammer, in denen Verbundverglasungen innerhalb von 30 - 60 Minuten laminiert werden können. Verminderte Drücke von 0,01 bis 300 mbar und Temperaturen von 100 bis 200 °C, insbesondere 130 - 160 °C haben sich in der Praxis bewährt.

Alternativ kann ein so oben beschrieben zusammengelegter Schichtkörper zwischen mindestens einem Walzenpaar bei einer Temperatur von 60 bis 150 °C zu einem erfindungsgemäßen Laminat verpresst werden. Anlagen dieser Art sind zur Herstellung von Verbundverglasungen bekannt und verfügen normalerweise über mindestens einen Heiztunnel vor bzw. nach dem ersten Presswerk bei Anlagen mit zwei Presswerken.

### Beispiele:

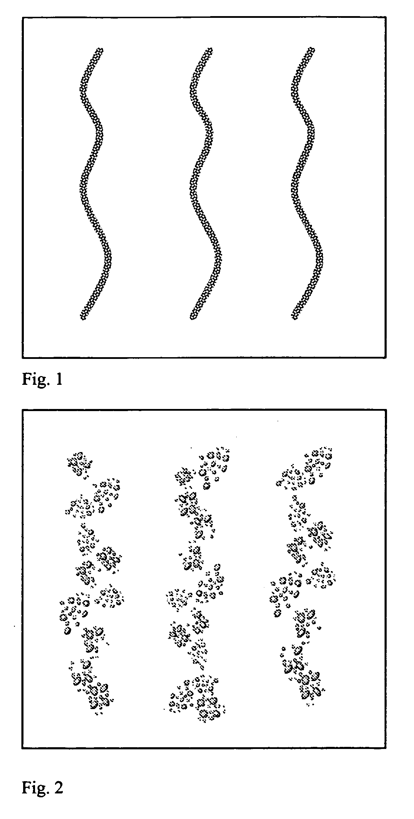

Zwei Scheiben Floatglas der Dicke 4 mm werden gewaschen. Auf die untere Scheibe wird eine PVB-Folie des Typs TROSIFOL BG R15 in Dicke 0.76 mm aufgelegt. Porofor TSH wird unter Zuhilfenahme einer Schablone in Wellenlinien in einer Menge von ca. 2 mg/cm2 auf die Folienoberfläche aufgepudert (siehe Fig. 1). Eine zweite PVB-Folie der Dicke 0.76 mm sowie das Deckglas werden danach vorsichtig, um ein Verwehen des pulverförmigen Treibmittels zu vermeiden, aufgelegt.

Anschließend wird ein dem Fachmann bekannter Walzenvorverbund durchgeführt, bei dem sich der Vorverbund auf maximal 75 °C erwärmt. Diese Temperatur liegt so niedrig, dass auf dieser Stufe noch kein Gas freigesetzt wird. Beim Walzenvorverbundprozess wird ein Großteil der eingeschlossenen Luft herausgewalzt. Der Vorverbund wird danach einem dem Fachmann bekannten Autoklavenprozess unterworfen, bei welchem bei einem anliegenden Druck von 12 bar eine Temperatur von ca. 140 °C während 30 min. konstant gehalten wird. Bei dieser Temperatur zerfällt das Treibmittel vollständig und setzt Stickstoff frei, welcher jedoch aufgrund des gleichzeitig herrschenden Druckes zunächst nicht in Blasenform ausperlt sondern sich physikalisch in der PVB-Folie löst und nach langsamem Abkühlen der Verbundverglasung (VSG) auch beim Entfernen des Druckes übersättigt in Lösung bleibt.

Das fertige VSG unterscheidet sich jetzt zunächst optisch nicht von einem defektfreien VSG. Nur ein leichter Schleier aufgrund der nicht gasförmigen Restbestandteile des Treibmittels ist erkennbar.

Im nachfolgenden Schritt wird das VSG bei Atmosphärendruck während 16 h auf eine Temperatur von 90 °C aufgeheizt, wobei die PVB-Folie weich wird und der Stickstoff in Blasenform ausperlen kann. Das fertige dekorative VSG weist in der Folienschicht nun ein Blasenmuster wie von unter Wasser aufsteigenden Luftblasen auf. Fig. 2 zeigt das erhaltene Blasenmuster.

## Patentansprüche

1. Verfahren zur Herstellung von dekorativen Gaseinschlüssen enthaltenden Laminaten durch Erwärmen eines Schichtkörpers aus mindestens zwei transparenten Scheiben und mindestens einer polymeren Zwischenschichtfolie, **dadurch gekennzeichnet dass** der Schichtkörper mindestens ein Treibmittel enthält und über die Zerfallstemperatur des Treibmittels erwärmt wird, wobei mindestens ein Treibmittel auf die polymeren Zwischenschichtfolien und/oder mindestens eine transparente Scheibe aufgebracht wird.

2. Verfahren nach Anspruch 1, **dadurch gekennzeichnet, dass** mindestens ein Treibmittel als Feststoff, in Dispersion oder in Lösung auf eine oder beide Oberflächen der Zwischenschichtfolie und/oder mindestens einer der transparenten Scheiben aufgebracht wird.

3. Verfahren nach einem der Ansprüche 1 bis 2, **dadurch gekennzeichnet, dass** die polymere Zwischenschichtfolie weichmacherhaltiges Polyvinylacetal enthält.

4. Verfahren nach Anspruch 1 bis 3, **dadurch gekennzeichnet, dass** als Treibmittel in einem Temperaturbereich von 80 bis 180 °C in mindestens ein gasförmiges Produkt zerfällt.

5. Verfahren nach einem der Ansprüche 1 bis 4, **dadurch gekennzeichnet, dass** der Schichtkörper bei einer Temperatur über der Zerfallstemperatur des Treibmittels unter erhöhtem Druck zu einem Laminat verarbeitet wird, wobei nach Abkühlen des Laminats unter die Zerfallstemperatur des Treibmittels das aus dem zerfallenen Treibmittel erhaltene Gas ganz oder teilweise in der Zwischenschichtfolie gelöst bleibt und durch anschließendes Wiedererwärmen des Laminats bei wieder reduziertem Druck über die Erweichungstemperatur der Zwischenschichtfolie ausperlt.

6. Verfahren nach einem der Ansprüche 1 bis 4, **dadurch gekennzeichnet, dass** der Schichtkörper bei einer Temperatur über der Zerfallstemperatur des Treibmittels unter erhöhtem Druck zu einem Laminat verarbeitet wird, wobei nach Abkühlen des Laminats unter die Zerfallstemperatur des Treibmittels das aus dem zerfallenen Treibmittel erhaltene Gas ganz oder teilweise in der Zwischenschichtfolie gelöst bleibt und bei wieder reduziertem Druck ausperlt.

7. Verfahren nach einem der Ansprüche 1 bis 6, **dadurch gekennzeichnet, dass** als Treibmittel Azodicarbonamide, Toluolsulfohydrazide und/oder Bicarbonate eingesetzt werden.

## Claims

1. A method for producing laminates containing decorative gas inclusions by heating a layered body formed of at least two transparent layers and at least one polymer interlayer film, **characterised in that** the layered body contains at least one blowing agent and is heated above the decomposition temperature of the blowing agent, at least one blowing agent being applied to the polymer interlayer films and/or at least one transparent layer.

2. The method according to claim 1, **characterised in that** at least one blowing agent is applied as a solid, in dispersion or in solution to one or both surfaces of the interlayer film and/or at least one of the transparent layers.

3. The method according to any one of claims 1 to 2, **characterised in that** the polymer interlayer film contains plasticiser-containing polyvinyl acetal.

4. The method according to any one of claims 1 to 3, **characterised in that** the blowing agent decomposes into at least one gaseous product in a temperature range of 80 to 180 °C

5. The method according to any one of claims 1 to 4, **characterised in that** the layered body is processed to form a laminate at a temperature above the decomposition temperature of the blowing agent under increased pressure, the gas obtained from the decomposed blowing agent remaining dissolved, entirely or in part, in the interlayer film once the laminate has been cooled beneath the decomposition temperature of the blowing agent and bubbling out as a result of subsequent re-heating of the laminate at pressure which has been reduced again and above the softening temperature of the interlayer film.

6. The method according to any one of claims 1 to 4, **characterised in that** the layered body is processed to form a laminate at a temperature above the decomposition temperature of the blowing agent under increased pressure, the gas obtained from the decomposed blowing agent remaining dissolved, entirely or in part, in the interlayer film once the laminate has been cooled beneath the decomposition temperature of the blowing agent and bubbling out at a pressure which has been reduced again.

7. The method according to any one of claims 1 to 6, **characterised in that** azodicarbonamides, toluenesulphohydrazides and/or bicarbonates are used as a blowing agent.

## Revendications

1. Procédé de fabrication de laminés dotés de bulles de gaz décoratives, par échauffement d'un stratifié composé d'au moins deux plaques transparentes et d'au moins un film polymère formant couche intermédiaire, **caractérisé en ce que** le stratifié contient au moins un agent propulseur et **en ce qu'**on le réchauffe au-delà de la température de désintégration de l'agent propulseur, alors qu'on applique au moins un agent propulseur sur les films polymères formant couches intermédiaires et/ou au sur au moins une plaque transparente.

2. Procédé selon la revendication 1, **caractérisé en ce qu'**on applique au moins un agent propulseur en tant que solide, en dispersion ou en solution sur une face ou sur les deux faces du film formant couche intermédiaire et/ou sur au moins l'une des plaques transparentes.

3. Procédé selon l'une quelconque des revendications 1 à 2, **caractérisé en ce que** le film polymère formant couche intermédiaire contient du polyacétal de vinyle contenant un plastifiant.

4. Procédé selon la revendication 1 à 3, **caractérisé en ce qu'**en tant qu'agent propulseur, au moins un produit gazeux se désintègre dans une plage de températures de 80 à 180 °C.

5. Procédé selon l'une quelconque des revendications 1 à 4, **caractérisé en ce qu'**à une température supérieure à la température de désintégration de l'agent propulseur, on met en oeuvre le stratifié sous pression élevée en un laminé, après refroidissement du laminé en dessous de la température de désintégration de l'agent propulseur, le gaz obtenu à partir de l'agent propulseur désintégré restant totalement ou partiellement dissous dans le film formant couche intermédiaire et par réchauffement consécutif du laminé à pression de nouveau réduite étant soumis à un ébullisme au-delà de la température de ramollissement du film formant couche intermédiaire.

6. Procédé selon l'une quelconque des revendications 1 à 4, **caractérisé en ce qu'**à une température supérieure à la température de désintégration de l'agent propulseur, on met en oeuvre le stratifié sous pression élevée en un laminé, après refroidissement du laminé en dessous de la température de désintégration de l'agent propulseur, le gaz obtenu à partir de l'agent propulseur désintégré restant totalement ou partiellement dissous dans le film formant couche intermédiaire et étant soumis à un ébullisme lorsque la pression se réduit de nouveau.

7. Procédé selon l'une quelconque des revendications 1 à 6, **caractérisé en ce qu'**en tant qu'agent propulseur, on met en oeuvre des desazodicarbonamides, des toluène-sulfohydrazides et/ou des bicarbonates.
